# EUROPÄISCHE PATENTSCHRIFT

(11) **EP 2 351 991 B1**
(45) Veröffentlichungstag und Bekanntmachung des Hinweises auf die Patenterteilung: **29.06.2016**
(21) Anmeldenummer: 11152319.7
(22) Anmeldetag: 27.01.2011
(51) Int. Cl.: G01C 21/36

(54) **Verfahren zum Betrieb eines Navigationssystems mit der Anzeige einer Fahrspurschemaansicht**
Method for operating a navigation system with the display of a traffic lane schematic view
Procédé de fonctionnement d'un système de navigation à l'aide de l'affichage d'une vue schématique de la voie de circulation

(30) Priorität: 29.01.2010 DE 102010006317
(43) Veröffentlichungstag der Anmeldung: 03.08.2011
(73) Patentinhaber: Garmin Switzerland GmbH, 8200 Schaffhausen (CH)
(72) Erfinder: Gaupp, Moritz, 97072, Würzburg (DE)
(74) Vertreter: Uexküll & Stolberg

(56) Entgegenhaltungen:
- EP-A2- 1 965 173
- WO-A1-2009/096074
- DE-A1- 19 926 367
- DE-A1-102008 003 395
- JP-A- 2008 309 529

## Beschreibung

Die Erfindung betrifft ein Verfahren zum Betrieb eines Navigationssystems in einem Fahrzeug nach dem Oberbegriff des Anspruchs 1.

Gattungsgemäße Navigationssysteme werden beispielsweise als mobile Navigationsgeräte eingesetzt, um den Fahrer eines Kraftfahrzeugs von einem Startpunkt zu einem Zielpunkt zu führen. Das Navigationsgerät fragt dabei die Daten aus einer Datenbank ab, in der ein geographisches Gebiet durch Streckensegmente und Knotenpunkte beschrieben ist. Im Ergebnis beinhaltet die Datenbank also ein Netz von Streckensegmenten und dazwischen gelegenen Knotenpunkten, die das Wegenetz, insbesondere Straßennetz, in einer maschinenlesbaren Form beschreiben und so eine Verarbeitung in einer Datenverarbeitungsanlage durch entsprechende Rechenalgorithmen erlauben.

Mittels eines geeigneten recht guten Berechnungsverfahrens wird dabei aus diesen Daten der Datenbank eine Route in Form einer Folge von Streckensegmenten und Knotenpunkten selektiert, die den Benutzer vom Startpunkt zum Zielpunkt führt.

Bekannte Navigationssysteme berechnen aber nicht nur die Route vom Startpunkt zum Zielpunkt. Darüber hinaus werden von den Navigationssystemen auch Manöveranweisungen berechnet, die Anweisungen für den Benutzer enthalten, um ausgehend von der aktuellen Position Manöver auszuführen, durch die der Benutzer der Route folgt. Gelangt der Benutzer beispielsweise an eine Straßenkreuzung, so wird eine Manöveranweisung berechnet, die dem Benutzer angibt, in welche Richtung er an der Straßenkreuzung abzubiegen hat.

Für die Ausgabe der Manöveranweisungen an den Benutzer gibt es verschiedene Möglichkeiten. Üblicherweise wird die Manöveranweisung in der Form einer Sprachansage akustisch ausgegeben. Bei einem Abbiegevorgang an einer Kreuzung kann beispielsweise die Ansage erfolgen: "An der nächsten Kreuzung bitte links abbiegen". Die akustisch ausgegebenen Manöveranweisungen haben jedoch den Nachteil, dass sie dem Benutzer nach der Ansage nicht mehr fortlaufend zur Verfügung stehen. Hat der Benutzer die akustischen Manöveranweisungen nicht verstanden, muss die Manöveranweisung entweder wiederholt werden, oder der Benutzer muss ohne Manöveranweisungen weiter manövrieren.

Um dieses Problem zu lösen sind bei bekannten Navigationssystemen so genannte Manöverschemaansichten bekannt. In der Manöverschemaansicht wird zumindest das nächste und/oder übernächste auszuführende Manöver in schematisierter Form graphisch dargestellt und diese graphische Darstellung in einer Anzeigeeinrichtung angezeigt. Zudem wird bei den bekannten Navigationssystemen in einer schematisierten Form dargestellt, welche Fahrspuren am Ort des Manövers befahren werden sollen.

Ein zur Anzeige von Manöverschemaansichten geeignetes Navigationssystem ist beispielsweise aus der DE 10 2008 003 395 A1 bekannt. Nachteilig an dem dort beschriebenen Navigationssystem ist es, dass die Manöverschemaansicht abhängig von dem durchzuführenden Manöver berechnet und die aus der Berechnung folgende Gestaltung der Manöverschemaansicht dauerhaft angezeigt wird, bis alle Manöver der Manöverschemaansicht abgefahren sind. Dies bedeutet mit anderen Worten, dass der Benutzer während des Durchfahrens verschiedener in der Manöverschemaansicht angezeigter Manöver keine Möglichkeit hat, den Fortschritt innerhalb der Manöverschemaansicht zu kontrollieren. Dies ist insbesondere von großem Nachteil, wenn in der Manöverschemaansicht mehrere hintereinander zu durchfahrende Manöver graphisch dargestellt werden, da der Fahrer dann aufgrund der Vielzahl von hintereinander durchzuführenden Manövern vielfach die Orientierung in der Manöverschemaansicht verliert.

Die Anzeige von Fahrspuranweisungen bzw. Fahrspurschemaansichten ist beispielsweise aus den Dokumenten DE19926367, EP1965173, DE102008003395 und WO2009096074 bekannt.

Ausgehend vom vorbekannten Stand der Technik ist es Aufgabe der vorliegenden Erfindung, ein neues Verfahren zum Betrieb eines Navigationssystems mit der Anzeige von Fahrspurschemaansichten vorzuschlagen, mit dem die Orientierung des Benutzers in den Fahrspurschemaansichten, insbesondere bei Anzeige von mehreren Manövern in der Fahrspurschemaansicht, verbessert wird.

Diese Aufgabe wird durch ein Verfahren nach der Lehre des Anspruchs 1 gelöst.

Vorteilhafte Ausführungsformen der Erfindung sind Gegenstand der Unteransprüche.

Das gattungsgemäße Verfahren beruht auf dem Grundgedanken, dass die aktuelle Position des Fahrzeugs fortlaufend detektiert und die an der Anzeigeeinrichtung angezeigte Fahrspurschemaansicht abhängig von der aktuellen Position des Fahrzeugs fortlaufend aktualisiert wird. Dies bedeutet mit anderen Worten, dass die Fahrspurschemaansicht nicht mehr statisch angezeigt wird, sondern eine permanente Aktualisierung der Fahrspurschemaansicht unter Berücksichtigung der aktuellen Position des Fahrzeugs erfolgt. Damit hat der Benutzer bei Betrachtung der Fahrspurschemaansicht jederzeit die Möglichkeit, sich auch in der Fahrspurschemaansicht optimal zu orientieren, was insbesondere bei mehreren hintereinander durchzuführenden Manövern von großem Vorteil ist.

Wie hoch die Aktualisierungsfrequenz des erfindungsgemäßen Verfahrens, d.h. die Frequenz zur Aktualisierung der Fahrspurschemaansicht in Abhängigkeit von der jeweils festgestellten aktuellen Position des Fahrzeugs ist, ist grundsätzlich beliebig. Insbesondere hängt die jeweilige Aktualisierungsfrequenz von der zur Verfügung stehenden Rechnerleistung des verwendeten Navigationssystems ab. Besonders vorteilhaft ist es jedoch, wenn die Aktualisierungsfrequenz wenigstens so hoch ist, dass die nacheinander als Einzelbilder angezeigten, jeweils aktualisierten Fahrspurschemaansichten eine Filmsequenz ergeben. Die Aktualisierung der Fahrspurschemaansicht sollte somit also wenigstens circa 24 Mal/sec oder noch öfter erfolgen, so dass für den Benutzer der Eindruck entsteht, dass die Fahrspurschemaansicht sich kontinuierlich und ohne ruckende Einzelbilder in Abhängigkeit von der aktuellen Position des Fahrzeugs verändert. Soweit sich die GPS-Positionsbestimmung nur 1x pro Sekunde aktualisiert, erfordert so eine Frequenzhäufigkeit für eine kontinuierliche, ruckelfreie Darstellung der Fahrspurschemaansichten eine Interpolation der Fahrzeugposition zwischen den GPS-Messungen.

Auch ist es im Prinzip beliebig, wie viele Fahrspurwechselmanöver in der Fahrspurschemaansicht schematisiert graphisch dargestellt sind. Die größten Vorteile bietet das erfindungsgemäße Verfahren, wenn die Fahrspurschemaansicht mehrere hintereinander durchzuführende Fahrspurwechselmanöver darstellt, da aufgrund der erfindungsgemäßen Aktualisierung in Abhängigkeit von der jeweiligen Fahrzeugposition die Aufmerksamkeit des Benutzers auf das jeweils nächste Fahrspurwechselmanöver gelenkt werden kann.

Zudem verbessert es die Übersichtlichkeit in der Schemaansicht, wenn der Kurvenverlauf der realen Straße in der Fahrspurschemaansicht zumindest generalisiert wiedergegeben wird. Gegenüber einer rein schematischen Ansicht, die nur aus geraden Spuren besteht, ist damit eine höhere Wiedererkennung für den Nutzer gegeben.

Die Orientierung des Benutzers beim Durchfahren von Fahrspurwechselmanövern wird insbesondere dadurch verbessert, wenn bei Anzeige der Fahrspurschemaansicht die Fahrspurwechselmanöver, die bereits hinter der aktuellen Position liegen, ausgeblendet werden. Denn die bereits hinter der aktuellen Position liegenden Fahrspurwechselmanöver sind für den Benutzer für das Folgen der Route bis zum Zielpunkt ohne Bedeutung und können deshalb ohne Orientierungsverlust ohne Weiteres außer Acht bleiben.

Ist es für das Folgen der Route notwendig, eine Vielzahl von unmittelbar hintereinander liegenden Fahrspurwechselmanövern durchzuführen, so kann es vorkommen, dass in der Fahrspurschemaansicht aufgrund dieser Tatsache eine Vielzahl von hintereinander liegenden Fahrspurwechselmanövern angezeigt werden müssen. Auch durch diese große Anzahl von anzuzeigenden Fahrspurwechselmanövern kann die Orientierung des Fahrers verschlechtert werden, da die primäre Aufmerksamkeit des Fahrers auf das jeweils nächstliegende Fahrspurwechselmanöver gerichtet werden soll. Dies bedeutet mit anderen Worten, dass es von Vorteil ist, wenn der Fahrer nicht durch die Anzeige von Fahrspurwechselmanövern in der Fahrspurschemaansicht verwirrt wird, die ohnehin erst in einiger Entfernung liegen und deshalb erst zu einem weit späteren Zeitpunkt durchfahren werden müssen. Um diesbezüglich die Orientierung des Fahrers zu verbessern, ist es deshalb vorteilhaft, wenn bei der Anzeige der Fahrspurschemaansicht lediglich die Fahrspurwechselmanöver angezeigt werden, die innerhalb einer vorgegebenen maximalen Darstellungsdistanz liegen. Alle Fahrspurwechselmanöver außerhalb dieser maximalen Darstellungsdistanz, werden dagegen nicht angezeigt, da sie für den Fahrer bei der jeweils aktuellen Fahrzeugposition noch ohne Bedeutung sind und vielmehr zur Desorientierung des Fahrers beitragen können.

Um den Berechnungsaufwand für die Berechnung der Fahrspurschemaansicht einerseits und die jeweils notwendige Aktualisierung der Fahrspurschemaansicht in Abhängigkeit von der aktuellen Fahrzeugposition zu reduzieren, umfasst die Fahrspurschemaansicht erfindungsgemäß mehrere Fahrspurwechselmanöver, wobei jedoch nur ein Ausschnitt der Fahrspurschemaansicht mit jeweils zumindest einem Fahrspurwechselmanöver angezeigt wird. Die relative Lage des angezeigten Ausschnitts der Fahrspurschemaansicht wird abhängig von der aktuellen Position des Fahrzeugs fortlaufend aktualisiert.

Dies bedeutet mit anderen Worten, dass die Fahrspurschemaansicht für sich genommen nur einmal berechnet werden muss, wobei zur Aktualisierung der Fahrspurschemaansicht in Abhängigkeit von der aktuellen Fahrzeugposition jeweils nur der anzuzeigende Ausschnitt aus der Fahrspurschemaansicht variiert wird. Die jeweils maximal darzustellende Darstellungsdistanz kann dabei problemlos durch entsprechende Distanz- oder Größenvorgabe für den anzuzeigenden Ausschnitt definiert werden. Wenn eine Distanz- oder Größenvorgabe vorgegeben ist, bedeutet das, dass mit der Bewegung des Fahrzeugs in der Fahrspurschemaansicht vorne Elemente entfallen und hinten neue ergänzt werden, sofern weitere Manöver folgen. Das heißt, dass die Fahrspurschemaansicht nicht nur einmal berechnet wird, sondern regelmäßig geprüft werden muss, ob Elemente entfallen oder hinzugefügt werden müssen.

Um dem Benutzer die intuitive Erkennbarkeit der Fahrspurschemaansicht zu ermöglichen, wird die Orientierung des angezeigten Ausschnitts der Fahrspurschemaansicht jeweils abhängig von der aktuellen Fahrtrichtung des Fahrzeugs an der aktuellen Position aktualisiert.

Dies bedeutet mit anderen Worten, dass der angezeigte Ausschnitt der Fahrspurschemaansicht jeweils in Abhängigkeit von der Fahrtrichtung gedreht wird, so dass beispielsweise die Fahrspurschemaansicht jeweils in Fahrtrichtung von unten nach oben angezeigt wird.

Im Hinblick auf die optimale Orientierung des Benutzers ist es weiterhin vorteilhaft, wenn die aktuelle Position des Fahrzeugs in die Fahrspurschemaansicht eingeblendet wird. Bei der Aktualisierung der Fahrspurschemaansicht muss in diesen Fällen dann nicht die gesamte Fahrspurschemaansicht neuberechnet werden, sondern lediglich die Lage der aktuellen Position des Fahrzeugs in der Fahrspurschemaansicht. Bei hinreichend genauer Positionierung, etwa mit Hilfe von Koppelortungssensoren, Fahrspurerkennung etc., ist es zudem möglich, die aktuelle befahrene Fahrspur optisch in der Fahrspurschemaansicht kenntlich zu machen.

Alternativ zur Aktualisierung der in der Fahrspurschemaansicht eingeblendeten aktuellen Position des Fahrzeugs ist es auch denkbar, dass die aktuelle Position des Fahrzeugs in der Fahrspurschemaansicht feststehend, beispielsweise am unteren Rand der Fahrspurschemaansicht, angezeigt wird. Die in der Anzeigeeinrichtung angezeigte schematisierte graphisch dargestellte Fahrspurschemaansicht wird dann jeweils relativ zu dieser feststehenden Anzeigeposition verschoben und in der verschobenen Lage angezeigt.

Prinzipiell ist es denkbar, dass die Fahrspurschemaansicht alleinstehend an der Anzeigeeinrichtung angezeigt wird. Gemäß einer bevorzugten Verfahrensvariante ist es jedoch vorgesehen, dass die Fahrspurschemaansicht parallel zur schematisierten Kartendarstellung, insbesondere in einem Rahmen vorgegebener Größe, auf der Anzeigeeinrichtung des Navigationsgeräts dargestellt wird. Dies bedeutet mit anderen Worten, dass die schematisierte Kartendarstellung entsprechend der üblichen Routenführung dauerhaft angezeigt und in diese schematisierte Kartendarstellung abhängig von der aktuellen Position und der Relativlage zu einem Fahrspurmanöver die Fahrspurschemaansicht eingeblendet wird. Die eingeblendete Fahrspurschemaansicht kann dann jeweils abhängig von der sich ändernden aktuellen Fahrzeugposition aktualisiert und neu gezeichnet angezeigt werden.

Wird die Fahrspurschemaansicht parallel zu der schematischen Kartendarstellung angezeigt, so ist es besonders vorteilhaft, wenn die Aktualisierungsfrequenz zur Aktualisierung der Fahrspurschemaansicht der Aktualisierungsfrequenz zur Aktualisierung der schematischen Kartendarstellung entspricht, so dass die Aktualisierung der beiden Darstellungsformen jeweils synchron zueinander erfolgt.

Um das intuitive Verständnis der Fahrspurschemaansicht in der erfindungsgemäß aktualisierten Form weiter zu verbessern, kann auch die Fahrspurschemaansicht in einer dreidimensionalen perspektivischen Darstellung des Fahrspurwechselmanövers erfolgen. Dies bedeutet mit anderen Worten, dass die Fahrspurschemaansicht nicht nur zweidimensional, beispielsweise in einer Draufsicht, angezeigt werden kann, sondern auch eine dreidimensionale perspektivische Darstellung zur Anzeige auf der zweidimensionalen Anzeigeeinrichtung berechnet und angezeigt wird. Diese dreidimensionale, perspektivische Darstellung hat den Vorteil, dass die nächstliegenden Fahrspurwechselmanöver entsprechend vergrößert am Bildvordergrund dargestellt werden, wohingegen noch weiter entfernte Teile des Fahrspurwechselmanövers verkleinert im Bildhintergrund angezeigt sind.

Für die dreidimensionale perspektivische Darstellung ist es erforderlich, dass eine Kameraposition, insbesondere die Höhe der Kameraposition, vorzugsweise oberhalb der Fahrzeugposition definiert wird, um die perspektivische Darstellung zu definieren. Welche Höhe die Kameraposition hat, ist zunächst beliebig. In einer vorteilhaften Ausprägung ist die Kameraposition abhängig von kontextspezifischen Parametern, wie die empfohlene oder tatsächliche Fahrtgeschwindigkeit, Straßenklasse, Manöverkomplexität, d.h. insbesondere Anzahl Fahrspuren oder Länge des Manövers. So ist es besonders vorteilhaft, wenn ein längeres Manöver mit einer höheren Kameraposition dargestellt wird, um weiter nach vorne schauen zu können.

Eine verbesserte Orientierung in der Fahrspurschemaansicht wird möglich, wenn in der perspektivischen Darstellung auch Höhenunterschiede im Kreuzungsverlauf berücksichtigt werden. So kann der Benutzer einfacher eine Zuordnung zwischen Realität und schematischer Darstellung erreichen, wenn er erkennt, dass z.B. erst nach einer Kuppe ein Abbiegevorgang notwendig ist. Durch entsprechende Wahl der Kamerahöhe in Abhängigkeit des Reliefs ist es möglich, gleichzeitig die Kuppensituation und die Abbiegespuren dem Nutzer anzuzeigen.

In der Fahrspurschemaansicht ist es nicht sinnvoll, Streckensegmente, die nicht Bestandteil der Route sind, vollständig darzustellen, da die nicht zur Route gehörigen Streckensegmente bei Fahrspurwechselmanövern lediglich zur Orientierung hinsichtlich der Kreuzungssituation notwendig sind. Gemäß einer bevorzugten Verfahrensvariante werden diese Streckensegmente, die nicht Bestandteil der Route sind, deshalb in der Fahrspurschemaansicht nur bis zu einer vorgegebenen Maximallänge angezeigt. Durch die Anzeige dieser Streckensegmentstümpfe ist eine ausreichende Orientierung über die Kreuzungssituation möglich, ohne dass die Fahrspurschemaansicht durch nicht zur Route gehörige Streckensegmente überfrachtet wird.

Verschiedene Aspekte der Erfindung sind in den Zeichnungen schematisch dargestellt und werden nachfolgend beispielhaft erläutert.

Es zeigen:
- Fig. 1: die Geometrie einer beispielhaften Kreuzungssituation;
- Fig. 2: die schematisierte Spurendarstellung der Kreuzungssituation gemäß Fig. 1 mit eingezeichnetem Routenweg;
- Fig. 3: die Spurendarstellung gemäß Fig. 2 zu Beginn eines Fahrspurwechselmanövers;
- Fig. 4: die Fahrspurschemaansicht zur Anzeige an der Anzeigeeinrichtung eines Navigationssystems entsprechend der Fahrzeugposition in Fig. 3;
- Fig. 5: die Spurensituation gemäß Fig. 2 in der Mitte eines Fahrspurwechselmanövers;
- Fig. 6: die Fahrspurschemaansicht zur Anzeige an der Anzeigeeinrichtung eines Navigationssytems entsprechend der Fahrzeugposition in Fig. 5;
- Fig. 7: die Spurendarstellung gemäß Fig. 2 am Ende eines Fahrspurwechselmanövers;
- Fig. 8: die Fahrspurschemaansicht zur Anzeige an einer Anzeigeeinrichtung eines Navigationssytems entsprechend der Fahrzeugposition in Fig. 7.

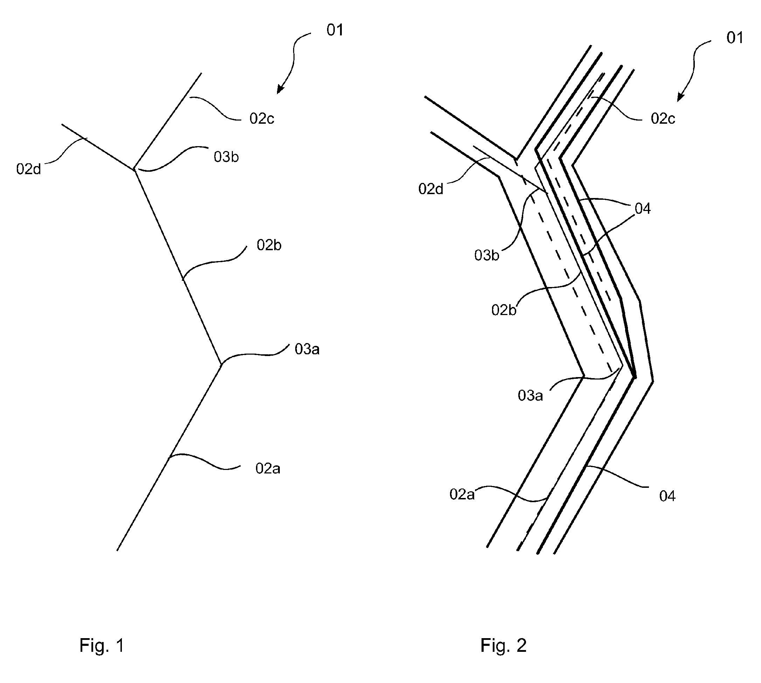

In Fig. 1 zeigt beispielhaft die Geometrie einer Kreuzung 01, die aus den Streckensegmenten 02 und den Knotenpunkten 03 aufgebaut und in einer Datenbank eines Navigationssystems gespeichert ist. Um der gewünschten Route zu folgen, muss der Fahrer den Streckensegmenten 02a, 02b und 02c folgen. Das bedeutet, an der am Knotenpunkt 03b gelegenen Kreuzung muss der Fahrer in das Streckensegment 02c abbiegen und das Streckensegment 02d links liegen lassen.

Fig. 2 zeigt die Kreuzung 01 unter Hinzunahme der Spureninformationen entlang der Streckensegmente 02. Man erkennt, dass im Streckensegment 02a zwei Spuren, im Streckensegment 02b drei Spuren und im Streckensegment 02c wiederum zwei Spuren zur Verfügung stehen. Das Streckensegment 02d besteht nur aus einer Spur. Um der Route 04 folgen zu können, muss der Fahrer sich also entlang der Streckensegmente 02a und 02b geeignet einordnen, da er ansonsten in unerwünschter Weise in Richtung des Streckensegments 02d abbiegen würde. Innerhalb der Streckensegmente 02b und 02c stehen dem Fahrer dabei zwei alternative Routenverläufe zur Verfügung, die den beiden Fahrspuren aus dem Streckensegment 02b in Richtung des Streckensegments 02c entsprechen.

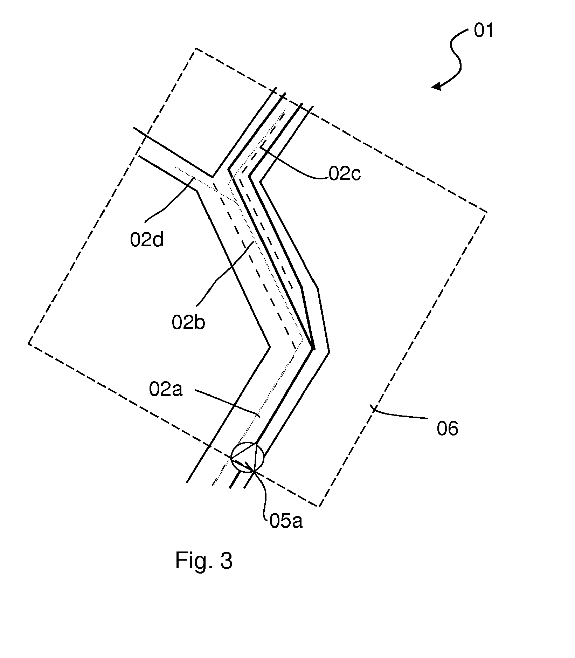

Fig. 3 zeigt die Kreuzung 01 zu Beginn des Fahrspurwechselmanövers zur Durchfahrung der Route 04 vom Streckensegment 02a in Richtung des Streckensegments 02c. Die aktuelle Fahrzeugposition 05 liegt auf dem Streckensegment 02a. Soll nun für das Fahrspurwechselmanöver eine Fahrspurschemaansicht berechnet werden, so werden die Spureninformationen und Lageinformationen über die Streckensegmente 02 und die Knotenpunkte 03 aus der entsprechenden Datenbank ausgelesen und eine dreidimensionale Fahrspurschemaansicht berechnet. Die Berechnung und Anzeige der Fahrspurschemaansicht erfolgt dabei in Abhängigkeit von der aktuellen Position 05 des Fahrzeugs und von der aktuellen Fahrtrichtung. In Fig. 3 ist dies beispielhaft dadurch schematisch dargestellt, dass die Fahrspurschemaansicht jeweils einen Ausschnitt 06 umfasst, dessen Größe fest vorgegeben ist und dessen Orientierung jeweils der Fahrtrichtung des Fahrzeugs entspricht.

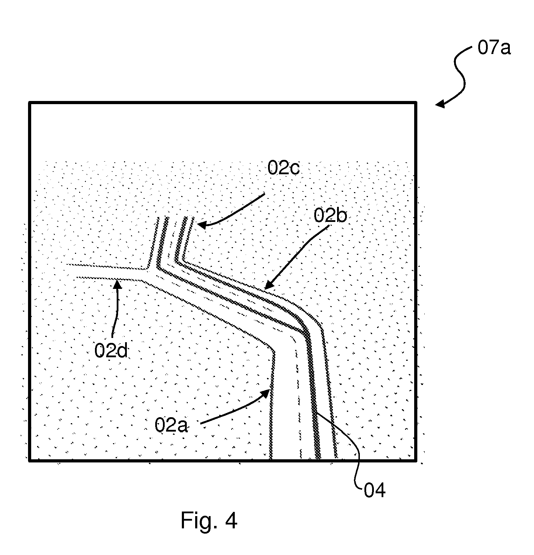

Fig. 4 zeigt beispielhaft die Fahrspurschemaansicht 07a, die entsprechend der aktuellen Fahrzeugposition 05a und unter Berücksichtigung der Größe des Ausschnitts 06 und der Fahrtrichtung berechnet wurde. Dem Fahrer werden also in der Fahrspurschemaansicht alle Streckensegmente 02a, 02b, 02c und 02d und die zugehörigen Fahrspuren und die Route 04 in dreidimensional, perspektivischer Darstellungsform angezeigt, wobei auch die Winkel bzw. Kurven zwischen den Streckensegmenten erhalten bleiben. Ansonsten enthält die Fahrspurschemaansicht 07a keinerlei Karteninformationen, um den Fahrer nicht durch unnötige Kartendetails zu verwirren.

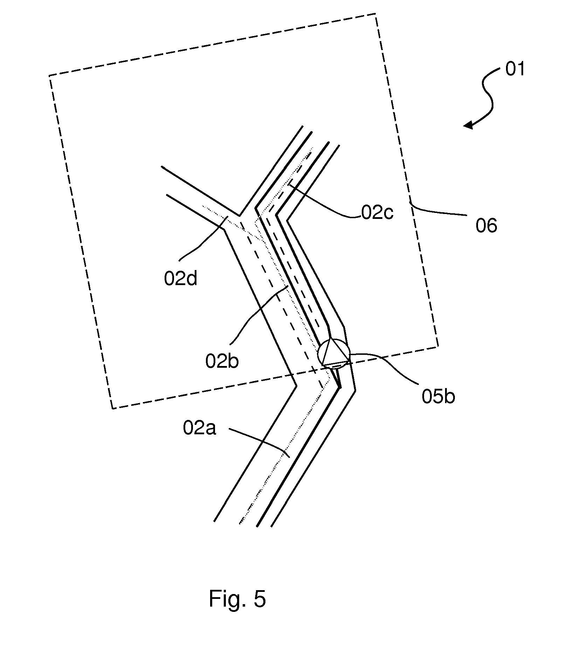

Fig. 5 stellt die Kreuzung 01 in der Mitte des durchzuführenden Fahrspurwechselmanövers dar. Das Fahrzeug befindet sich dabei bereits auf dem Streckensegment 02b und hat das Streckensegment 02a bereits vollständig durchfahren. Der Ausschnitt 06 für die Berechnung der anzuzeigenden Fahrspurschemaansicht 07 hat sich entsprechend der Fahrzeugposition 05b relativ über die Kreuzung 01 bewegt, wobei die Orientierung des Ausschnitts 06 der Fahrtrichtung des Fahrzeugs in der Fahrzeugposition 05b entspricht.

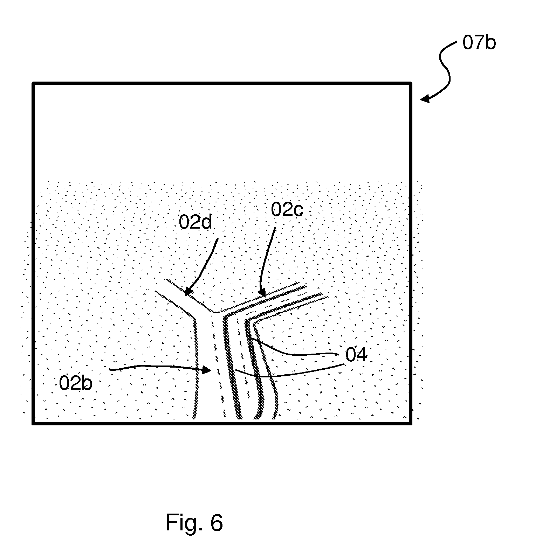

Fig. 6 zeigt die Fahrspurschemaansicht 07b, wie sie für die Fahrzeugposition 05b berechnet wurde. Das Streckensegment 02a wird in der Fahrspurschemaansicht 07b nicht mehr dargestellt, da es bereits durchfahren ist. Nur noch die vor dem Fahrzeug liegenden Anteile des Fahrspurwechselmanövers mit den Streckensegmenten 02b, 02c und 02d werden angezeigt.

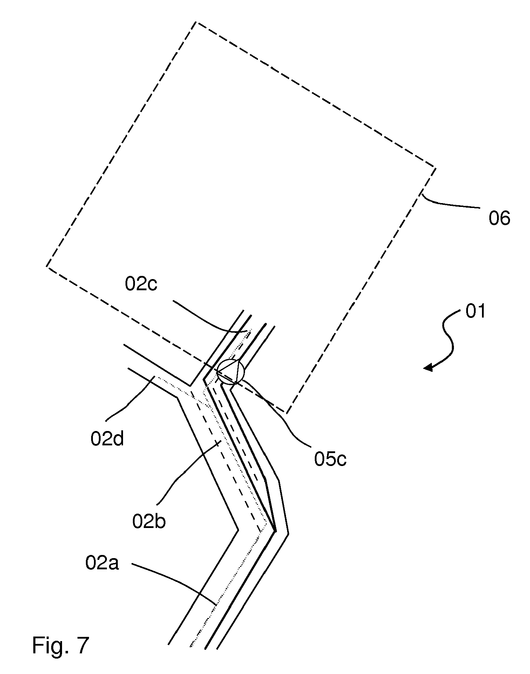

Fig. 7 zeigt die Kreuzung 01 am Ende des durchzuführenden Fahrspurwechselmanövers mit der aktuellen Fahrzeugposition 05c. Der Ausschnitt 06 für die Berechnung der Fahrspurschemaansicht 07 wurde entsprechend der aktuellen Fahrzeugposition 05c verschoben. Nur noch das Streckensegment 02c ist im Ausschnitt 06 enthalten.

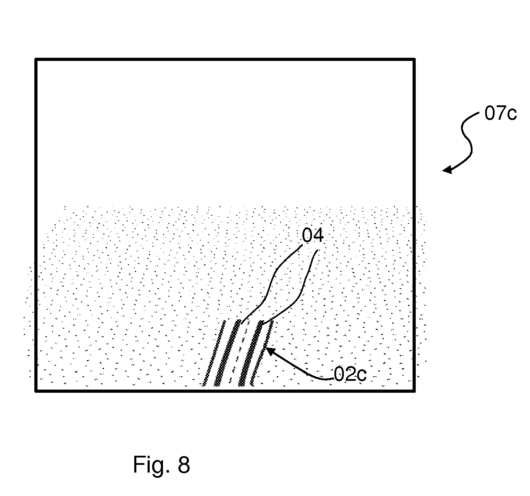

Fig. 8 zeigt die Fahrspurschemaansicht 07c entsprechend der Fahrzeugposition 05c. Alle bereits durchfahrenen Streckensegmente des Fahrspurwechselmanövers werden in der Fahrspurschemaansicht 07c entsprechend der aktuellen Position 05c nicht mehr angezeigt. Auch wird das Streckensegment 02d nicht mehr angezeigt, da es für die weitere Routenführung nicht mehr von Bedeutung ist.

## Patentansprüche

1. Verfahren zum Betrieb eines Navigationssystems in einem Fahrzeug mit folgenden Verfahrensschritten:
a) Berechnung einer Route (04) von einem Startpunkt zu einem Zielpunkt, wobei die Route aus einer Folge von Streckensegmenten (02) und Knotenpunkten (03) zwischen den Streckensegmenten (02) besteht, die mit einem Routenberechnungsverfahren aus einer Datenbank, in der ein geographisches Gebiet durch Streckensegmente (02) und Knotenpunkte (03) beschrieben ist, selektiert wird,
b) Berechnung zumindest einer Fahrspuranweisung, die Anweisungen für den Benutzer enthält, um ausgehend von der aktuellen Position (05) der berechneten Route (04) durch ein Fahrspurwechselmanöver zu folgen,
c) Berechnung und Anzeige einer Fahrspurschemaansicht (07) an einer Anzeigeeinrichtung, wobei die Fahrspurschemaansicht (07) Streckensegmente (02a, 02b, 02c, 02d) und die zugehörigen Fahrspuren sowie die Fahrspuranweisung schematisiert graphisch darstellt,
**dadurch gekennzeichnet,**
**dass**
während der Anzeige einer Fahrspurschemaansicht (07) fortlaufend die aktuelle Position (05) und die aktuelle Fahrtrichtung des Fahrzeuges festgestellt werden, wobei die an der Anzeigeeinrichtung angezeigte Fahrspurschemaansicht (07) abhängig von der aktuellen Position des Fahrzeuges fortlaufend mit einer vorgegebenen Aktualisierungsfrequenz aktualisiert wird,
wobei die Fahrspurschemaansicht (07a, 07b, 07c) mehrere Fahrspurwechselmanöver umfasst, wobei an der Anzeigeeinrichtung nur ein Ausschnitt (06) mit zumindest einem Fahrspurwechselmanöver angezeigt wird, und wobei die relative Lage des angezeigten Ausschnitts (06) in Bezug auf die Fahrspurschemaansicht (07a, 07b, 07c) abhängig von der aktuellen Position (05) des Fahrzeuges fortlaufend aktualisiert wird, wobei die Orientierung des angezeigten Ausschnitts (06) abhängig von der aktuellen Position (05) und der aktuellen Fahrtrichtung des Fahrzeuges fortlaufend aktualisiert wird.

2. Verfahren nach Anspruch 1,
**dadurch gekennzeichnet,**
**dass** die Aktualisierungsfrequenz so hoch ist, dass die nacheinander als Einzelbilder angezeigten, jeweils aktualisierten Fahrspurschemaansichten (07a, 07b, 07c) gemeinsam eine Filmsequenz ergeben.

3. Verfahren nach Anspruch 1 oder 2,
**dadurch gekennzeichnet,**
**dass** die Fahrspurschemaansicht (07a, 07b, 07c) mehrere hintereinander durchzuführende Fahrspurwechselmanöver schematisiert graphisch darstellt.

4. Verfahren nach einem der Ansprüche 1 bis 3,
**dadurch gekennzeichnet,**
**dass** bei der Anzeige der Fahrspurschemaansicht (07a, 07b, 07c) die Fahrspurwechselmanöver, die bereits hinter der aktuellen Position (05) liegen, ausgeblendet werden.

5. Verfahren nach einem der Ansprüche 1 bis 4,
**dadurch gekennzeichnet,**
**dass** bei der Anzeige der Fahrspurschemaansicht (07a, 07b, 07c) nur die Fahrspurwechselmanöver eingeblendet werden, die innerhalb einer vorgegebenen maximalen Darstellungsdistanz liegen.

6. Verfahren nach einem der Ansprüche 1 bis 5,
**dadurch gekennzeichnet,**
**dass** die aktuelle Position (05) des Fahrzeuges in die Fahrspurschemaansicht (07a, 07b, 07c) eingeblendet wird.

7. Verfahren nach Anspruch 6,
**dadurch gekennzeichnet,**
**dass** die aktuelle Position (05) des Fahrzeuges in der Fahrspurschemaansicht (07a, 07b, 07c) feststehend angezeigt wird, wobei die in der Fahrspurschemaansicht (07a, 07b, 07c) angezeigte schematisiert graphisch dargestellte Fahrspuranweisung relativ zur aktuellen Position (05) des Fahrzeuges verschoben angezeigt wird.

8. Verfahren nach einem der Ansprüche 1 bis 7,
**dadurch gekennzeichnet,**
**dass** die Fahrspurschemaansicht (07a, 07b, 07c) parallel zu einer schematischen Kartendarstellungen, insbesondere in einem Rahmen vorgegebener Größe, auf der Anzeigeeinrichtung des Navigationsgerätes dargestellt wird.

9. Verfahren nach Anspruch 8,
**dadurch gekennzeichnet,**
**dass** die Aktualisierungsfrequenz zur Aktualisierung der Fahrspurschemaansicht (07a, 07b, 07c) der Aktualisierungsfrequenz zur Aktualisierung der schematischen Kartendarstellung entspricht.

10. Verfahren nach einem der Ansprüche 1 bis 9,
**dadurch gekennzeichnet,**
**dass** die Fahrspurschemaansicht (07a, 07b, 07c) in einer dreidimensionalen perspektivischen Darstellung des Fahrspurwechselmanövers auf der zweidimensionalen Anzeigeeinrichtung angezeigt wird.

11. Verfahren nach Anspruch 10,
**dadurch gekennzeichnet,**
**dass** die Kameraposition für die Berechnung der dreidimensionalen perspektivischen Darstellung des Fahrspurwechselmanövers abhängig von kontextspezifischen Parametern, insbesondere abhängig von der empfohlenen oder tatsächlichen Fahrtgeschwindigkeit und/oder von der Straßenklasse und/oder von der Manöverkomplexität und/oder von der Anzahl der Fahrspuren und/oder von der Länge des Manövers, verändert wird.

12. Verfahren nach Anspruch 10 oder 11,
**dadurch gekennzeichnet,**
**dass** für die Berechnung der dreidimensionalen perspektivischen Darstellung des Fahrspurwechselmanövers Höhenunterschiede im darzustellenden geographischen Gebiet, insbesondere im Verlauf einer in der Fahrspurschemaansicht (07a, 07b, 07c) darzustellenden Kreuzung, berücksichtigt werden.

13. Verfahren nach einem der Ansprüche 1 bis 12,
**dadurch gekennzeichnet,**
**dass** Streckensegmente (02d), die nicht Bestandteil der Route (04) sind, nur bis zu einer vorgegebenen Maximallänge in der Fahrspurschemaansicht (07a, 07b, 07c) angezeigt werden.

## Claims

1. Method for operating a navigation system in a vehicle, comprising the following method steps:
a) calculating a route (04) from a starting point to a destination point, wherein the route is composed of a succession of route segments (02) and nodes (03) between the route segments (02) which are selected by means of a route calculation method from a database in which a geographical region is described by route segments (02) and nodes (03),
b) calculating at least one lane instruction which contains instructions for the user to follow, starting from the current position (05), the calculated route (04) by means of a lane change maneuver,
c) calculating and displaying a schematic lane view (07) at a display device, wherein the schematic lane view (07) graphically represents in a schematized fashion route segments (02a, 02b, 02c, 02d) and the associated lanes as well as the lane instruction,
**characterized in that**
during the display of a schematic lane view (07) the current position (05) and the current travel direction of the vehicle are continuously determined, wherein the schematic lane view (07) displayed at the display device is continuously updated with a predetermined update frequency as a function of the current position of the vehicle,
wherein the schematic lane view (07a, 07b, 07c) comprises multiple lane change maneuvers, wherein only a section (06) with at least one lane change maneuver is displayed at the display device, and wherein the relative position of the displayed section (06) with respect to the schematic lane view (07a, 07b, 07c) is continuously updated as a function of the current position (05) of the vehicle, wherein the orientation of the displayed section (06) is continuously updated as a function of the current position (05) and the current travel direction of the vehicle.

2. Method according to claim 1,
**characterized in that**
the update frequency is so high that the schematic lane views (07a, 07b, 07c) which are displayed in succession in the form of individual images and which are each updated together produce a video sequence.

3. Method according to claim 1 or 2,
**characterized in that**
the schematic lane view (07a, 07b, 07c) graphically represents in a schematized fashion a plurality of lane change maneuvers to be carried out one after the other.

4. Method according to any of claims 1 to 3,
**characterized in that**
during the display of the schematic lane view (07a, 07b, 07c) the lane change maneuvers which already lie behind the current position (05) are hidden.

5. Method according to any of claims 1 to 4,
**characterized in that**
during the display of the schematic lane view (07a, 07b, 07c) only the lane change maneuvers which lie within a predetermined maximum representation distance are shown.

6. Method according to any of claims 1 to 5,
**characterized in that**
the current position (05) of the vehicle is shown in the schematic lane view (07a, 07b, 07c).

7. Method according to claim 6,
**characterized in that**
the current position (05) of the vehicle is displayed in the schematic lane view (07a, 07b, 07c) in a static fashion, wherein the graphically represented schematized lane instruction displayed in the schematic lane view (07a, 07b, 07c) is displayed so as to be shifted relative to the current position (05) of the vehicle.

8. Method according to any of claims 1 to 7,
**characterized in that**
the schematic lane view (07a, 07b, 07c) is represented on the display device of the navigation device in parallel to a schematic map representation, in particular in a frame of a predetermined size.

9. Method according to claim 8,
**characterized in that**
the update frequency for updating the schematic lane view (07a, 07b, 07c) corresponds to the update frequency for updating the schematic map representation.

10. Method according to any of claims 1 to 9,
**characterized in that**
the schematic lane view (07a, 07b, 07c) is displayed in a three-dimensional perspective view of the lane change maneuver on the two-dimensional display device.

11. Method according to claim 10,
**characterized in that**
the camera position for the calculation of the three-dimensional perspective view of the lane change maneuver is changed as a function of context-specific parameters, in particular as a function of the recommended or actual travel speed and/or of the road class and/or of the maneuver complexity and/or of the number of lanes and/or of the duration of the maneuver.

12. Method according to any of claims 10 or 11,
**characterized in that**
for the calculation of the three-dimensional perspective view of the lane change maneuver altitude variations in the geographical region to be represented, in particular in the course of an intersection to be represented in the schematic lane view (07a, 07b, 07c), are taken into consideration.

13. Method according to any of claims 1 to 12,
**characterized in that**
route segments (02d) which are not part of the route (04) are displayed in the schematic lane view (07a, 07n, 07c) only up to a predetermined maximum length.

## Revendications

1. Procédé pour l'exploitation d'un système de navigation dans un véhicule avec les étapes suivantes :
a) calcul d'un itinéraire (04) à partir d'un point de départ jusqu'à un point d'arrivée, l'itinéraire étant constitué d'une suite de segments de trajets (02) et de point nodaux (03) entre les segments de trajets (02), qui est sélectionnée à l'aide d'un procédé de calcul d'itinéraire dans une base de données, dans laquelle une zone géographique est décrite par des segments de trajets (02) et des points nodaux (03),
b) calcul d'au moins une instruction de voie de roulement, qui contient les instructions pour l'utilisateur, afin de suivre, à partir de la position actuelle (05), l'itinéraire (04) calculé par une manoeuvre de changement de voie de roulement,
c) calcul et affichage d'une vue schématique de la voie de roulement (07) sur un dispositif d'affichage, la vue schématique de la voie de roulement (07) représentant de manière schématique et graphique des segments de trajets (02a, 02b, 02c, 02d) et les voies de roulement correspondantes,
**caractérisé en ce que**
pendant l'affichage d'une vue schématique de la voie de roulement (07), la position actuelle (05) et le sens de déplacement du véhicule sont déterminées en continu, la vue schématique de la voie de roulement (07) affichée sur le dispositif d'affichage étant actualisée en continu en fonction de la position actuelle du véhicule, avec une fréquence d'actualisation prédéterminée, la vue schématique de la voie de roulement (07a, 07b, 07c) comprenant plusieurs manoeuvres de changement de voie de roulement, seule une section (06) avec au moins une manoeuvre de changement de voie étant affichée sur le dispositif d'affichage et la position relative de la section (06) représentée étant actualisée en continu par rapport à la vue schématique de la voie de roulement (07a, 07b, 07c) en fonction de la position actuelle (05) du véhicule, l'orientation de la section (06) affichée étant actualisée en continu en fonction de la position actuelle (05) et du sens de déplacement actuel du véhicule.

2. Procédé selon la revendication 1, **caractérisé en ce que** la fréquence d'actualisation est telle que les vues schématiques des voies de roulement (07a, 07b, 07c) représentées successivement sous la forme d'images individuelles et actualisées forment ensemble une séquence de film.

3. Procédé selon la revendication 1 ou 2, **caractérisé en ce que** la vue schématique de voie de roulement (07a, 07b, 07c) représente graphiquement et de manière schématique plusieurs manoeuvres de changement de voie à effectuer successivement.

4. Procédé selon l'une des revendications 1 à 3, **caractérisé en ce que**, lors de l'affichage de la vue schématique de voie de roulement (07a, 07b, 07c), les manoeuvres de changement de voie, qui se trouvent juste derrière la position actuelle (05), sont masquées.

5. Procédé selon l'une des revendications 1 à 4, **caractérisé en ce que**, lors de l'affichage de la vue schématique de voie de roulement (07a, 07b, 07c), seules sont affichées les manoeuvres de changement de voie qui se trouvent à une distance de représentation maximale prédéterminée.

6. Procédé selon l'une des revendications 1 à 5, **caractérisé en ce que** la position actuelle (05) du véhicule est affichée dans la vue schématique de voie de roulement (07a, 07b, 07c).

7. Procédé selon la revendication 6, **caractérisé en ce que** la position actuelle (05) du véhicule est affichée de manière fixe dans la vue schématique de voie de roulement (07a, 07b, 07c), l'instruction de voie de roulement, affichée dans la vue schématique de voie de roulement (07a, 07b, 07c) et représentée graphiquement de manière schématique, est affichée de manière décalée par rapport à la position actuelle (05) du véhicule.

8. Procédé selon l'une des revendications 1 à 7, **caractérisé en ce que** la vue schématique de voie de roulement (07a, 07b, 07c) est représentée parallèlement à une représentation cartographique schématique, plus particulièrement dans le cadre d'une taille prédéterminée, sur le dispositif d'affichage du dispositif de navigation.

9. Procédé selon la revendication 8, **caractérisé en ce que** la fréquence d'actualisation pour l'actualisation de la vue schématique de voie de roulement (07a, 07b, 07c) correspond à la fréquence d'actualisation pour l'actualisation de la représentation cartographique schématique.

10. Procédé selon l'une des revendications 1 à 9, **caractérisé en ce que** la vue schématique de voie de roulement (07a, 07b, 07c) est affichée dans une représentation tridimensionnelle en perspective de la manoeuvre de changement de voie sur le dispositif d'affichage bidimensionnel.

11. Procédé selon la revendication 10, **caractérisé en ce que** la position de la caméra pour le calcul de la représentation tridimensionnelle en perspective de la manoeuvre de changement de voie est modifiée en fonction de paramètres spécifiques au contexte, plus particulièrement en fonction de la vitesse recommandée ou réelle de déplacement et/ou de la catégorie de route et/ou de la complexité de la manoeuvre et/ou du nombre de voies et/ou de la longueur de la manoeuvre.

12. Procédé selon la revendication 10 ou 11, **caractérisé en ce que**, pour le calcul de la représentation tridimensionnelle en perspective de la manoeuvre de changement de voie, les différences d'altitude de la zone géographique à représenter, plus particulièrement sur le tracé d'un croisement à représenter dans la vue schématique de la voie de roulement (07a, 07b, 07c), sont prises en compte.

13. Procédé selon l'une des revendications 1 à 12, **caractérisé en ce que** des segments de trajets (02d), qui ne font pas partie de l'itinéraire (04), sont affichés jusqu'à une longueur maximale prédéterminée dans la vue schématique de voie de roulement (07a, 07b, 07c).
